# EUROPÄISCHE PATENTSCHRIFT

(11) **EP 0 676 851 B1**
(45) Veröffentlichungstag und Bekanntmachung des Hinweises auf die Patenterteilung: **07.07.1999**
(21) Anmeldenummer: 95105304.0
(22) Anmeldetag: 07.04.1995
(51) Int. Cl.: H02K 5/22, F04B 17/03

(54) **Elektrohydraulisches Motorpumpenaggregat**
Electrohydraulic motor-pump unit
Module moteur-pompe électrohydraulique

(30) Priorität: 08.04.1994 DE 9405873 U
(43) Veröffentlichungstag der Anmeldung: 11.10.1995
(73) Patentinhaber: HEILMEIER & WEINLEIN Fabrik für Oel-Hydraulik GmbH & Co. KG, D-81673 München (DE)
(72) Erfinder: Brunner, Rudolf Ing., D 85598 Baldham (DE)
(74) Vertreter: Grünecker, Kinkeldey, Stockmair & Schwanhäusser Anwaltssozietät

(56) Entgegenhaltungen:
- DE-A- 2 413 691
- DE-A- 3 513 472
- DE-A- 4 120 665
- GB-A- 1 281 107
- US-A- 1 792 044
- US-A- 3 001 006
- US-A- 4 362 351

## Beschreibung

Die Erfindung betrifft ein elektrohydraulisches Motorpumpenaggregat der im Oberbegriff des Patentanspruchs 1 angegebenen Art.

Bei einem aus DE-C-24 13 691 bekannten Ölpumpenaggregat besteht das Gehäuse aus zwei topfförmigen Gußteilen. Der obere Gehäuseteil hält innen eine Fassung für das obere Ende der Welle des Elektromotors und eine öldichte Kabeldurchführung für einen von außen zum Elektromotor verlegten Kabelstrang. Der formentechnische Aufwand für die Herstellung des Gehäuseoberteils ist beträchtlich. Die Kabeldurchführung ist kritisch hinsichtlich Leckage. Der größte Nachteil ist jedoch, daß der Hersteller des Aggregats von vornherein nicht wissen kann, welche Länge des Kabelstranges für den Einsatzfall des Aggregats gebraucht wird. Ein zu langer Kabelstrang läßt sich zwar ablängen. Dies bedeutet jedoch einen unnötigen Verlust. Reicht die Kabelstranglänge nicht aus, ist es aufwendig, den Kabelstrang den Vorschriften entsprechend nachträglich zu verlängern. Ferner besteht permanent die Gefahr, daß Zug im Kabelstrang durch die Kabeldurchführung bis auf den Elektromotor übertragen wird. Für Wartungs- oder Reparaturarbeiten muß das Aggregat weitestgehend und mühsam zerlegt werden.

Bei einem aus DE-A-35 13 472 bekannten elektrohydraulischen Motorpumpenaggregat ist der Gehäusedeckel vom Gehäuse-Hauptteil trennbar und als Gußteil mit integrierter Fassung für das Lager der Elektromotorwelle ausgebildet. Der Kabelstrang zum Elektromotor wird durch eine öldichte Kabeldurchführung seitlich aus dem Gehäuse-Hauptteil verlegt. Dem Hersteller des Aggregats ist es nicht möglich, die jeweils richtige Kabelstranglänge vorzusehen.

Bei eine aus DE-A-41 20 665 bekannten Hydraulikpumpe wird ein elektrischer Steuerteil mit einer unterseitig angebrachten Leiterplatte in einen zuvor in das Gehäuse eingepreßten Gehäuseteil eingesetzt. Gleichzeitig oder danach wird die elektrische Verbindung zum Motor hergestellt. Der Anschlußkabelstrang zum Motor wird durch den eingepreßten Gehäuseteil geführt und bedarf dort einer Abdichtung.

Eine aus US-A-3 001 006 bekannte Anschlußverbindung wird seitlich in eine Gehäusewand einer dynamoelektrischen Maschine eingesetzt. Die Anschlußkonstruktion steht in keiner baulichen Verbindung mit einer Gehäuseendplatte und einem Lagerschild für die durch das Gehäuse nach außen geführte Welle.

Weiterer, zum technologischen Hintergrund zählender Stand der Technik ist enthalten in: US-A-4 362 351, US-A-1 792 044 und GB-A-1 281 107.

Der Erfindung liegt die Aufgabe zugrunde, ein Aggregat der eingangs genannten Art zu schaffen, das herstellungstechnisch und montagetechnisch einfacher und kostengünstiger ist als die bekannten, und bei dem es unerheblich ist, welche Kabelstranglänge später für das Aggregat gebraucht wird.

Die gestellte Aufgabe wird erfindungsgemäß mit den im Patentanspruch 1 enthaltenen Merkmalen gelöst.

Bei dieser Ausbildung wird ein herstellungs- und montagetechnisch günstiger und preiswerter Gehäusedeckel vorgesehen, der zugleich auch Probleme aufgrund der bei der Herstellung noch unbekannten Länge des Anschlußkabelstranges beseitigt. Die im Gehäusedeckel fest und öldicht installierten Anschlußelemente ermöglichen nämlich die gleiche Länge für den im Inneren des Gehäuses zum Elektromotor führenden Kabelstrang. Die Länge des Außenkabels, über das die Anschlußelemente mit der Stromversorgung verbunden werden, braucht bei der Herstellung des Aggregats nicht berücksichtig zu werden. Der Benutzer kann das Aggregat wie einen herkömmlichen Elektromotor selbst anschließen. Dadurch werden bei der Herstellung des Aggregats für im späteren Einsatz unwichtige Kabellänge und die damit verbundenen Unkosten vermieden. Der Gehäusedeckel erfüllt eine Doppelfunktion, weil er als Lagerschild und für den Stromanschluß funktionell herangezogen wird. Der Gehäusedeckel ist eine einfach und kostengünstig vorfertigbare und leicht montierbare Einheit, läßt sich leicht abnehmen und gestattet einfachen Zugang bei Wartungs- und Reparaturarbeiten, ohne das Aggregat vollständig zerlegen zu müssen. Das Aggregat kann vor dem Versenden mit Öl gefüllt werden.

Die Ausführungsform gemäß Anspruch 2 ist bequem zu handhaben, entspricht den Schutzvorschriften und ermöglicht es dem späteren Benutzer oder Monteur des Aggregats, den elektrischen Anschluß so einfach wie möglich und frei zu gestalten, ohne den Hersteller des Aggregats von vornherein zu u.U. teuren Kompromissen zu zwingen. Der Hersteller des Aggregats spart Kabelmaterial und Kabellänge. Im abgedeckten Hohlraum sind die stromführenden Teile geborgen. Es ist genügend Platz, die Anschlüsse mit herkömmlichen Werkzeugen und Mitteln herzustellen. Ist die Kabellänge bekannt, dann kann der Hersteller einen entsprechenden Kabelstrang vormontieren, und ggfs. im Hohlraum speichern.

Die Ausführungsform gemäß Anspruch 3 ist herstellungstechnisch und montagetechnisch günstig. Die Dichtplatte verhindert den Austritt von Öl im Lagerbereich. Die Anschlußelemente übernehmen eine Doppelfunktion, da sie die Dichtplatte lagesichern und die Antriebsenergie zum Elektromotor weiterleiten.

Bei der Ausführungsform gemäß Anspruch 4 wird der Lagerbereich zuverlässig abgedichtet. Gleichzeitig isoliert die Dichtplatte.

Die Montage ist bei der Ausführungsform gemäß Anspruch 5 einfach. Ferner ist das Gehäuse gegenüber den Anschlußelementen elektrisch isoliert.

Die Ausführungsform gemäß Anspruch 6 ist kostengünstig. Es lassen sich handelsübliche Schrauben gängiger Größe verwenden, die mit herkömmlichen Werkzeugen zu handhaben sind. Die elektrische Isolierung ist einfach. Am freien Schaftende lassen sich die Außenkabel in herkömmlicher Weise fest anschließen. Die Innenkabel brauchen nur an die Steckfahnen angesteckt zu werden, was die Montage und Demontage vereinfacht.

Mit den Unterlegscheiben gemäß Anspruch 7 lassen sich die Anschlußelemente fest anziehen. Die Unterlegscheiben sind handelsüblich und preiswert.

Die O-Ringe gemäß Anspruch 8 sind handelsüblich in jeweils passenden Größen leicht erhältlich. Sie sorgen für die Öl-Abdichtung und für die elektrische Isolierung gegenüber dem Gehäuse.

Der Gehäusedeckel gemäß Anspruch 9 ist kostengünstig und maßgenau als Blechformteil herstellbar. Er läßt sich mit allen Elementen vorfertigen und braucht nur mehr am Gehäuse angebracht zu werden. Das Wellenende wird sauber zentriert und präzise gelagert. Der Gehäusedeckel enthält aber auch die integrierte, öldichte und verlustarme Stromdurchführung. Die Scheibe deckt, den Vorschriften entsprechend, die stromführenden Teile nach außen ab.

Gemäß Anspruch 10 verhindert der elastische Belag den Stromübertritt bei unkontrollierten Berührungen mit blanken Teilen. Mittels des elastischen Belags läßt sich der Deckel schwingungsarm und leicht lösbar festlegen.

Bei der Ausführungsform gemäß Anspruch 11 gestaltet sich das Anschließen der Außenkabel einfach. In der Durchstecktülle werden die Kabel gegen Beschädigungen geschützt. Außerdem wird der Zutritt von Verschmutzungen und Feuchtigkeit zu den Anschlußelementen behindert.

Eine kostengünstige Ausführungsform geht schließlich aus Anspruch 12 hervor. Der Gehäuse-Hauptteil läßt sich als Gußteil einfach und formgetreu herstellen. Die Querwand erhöht die Gestaltfestigkeit des Gehäuse-Hauptteils und sorgt für eine präzise Lagerung der Welle im Hauptlager. Der Gehäusedeckel ist im Stirnrand platzsparend und exakt zentriert.

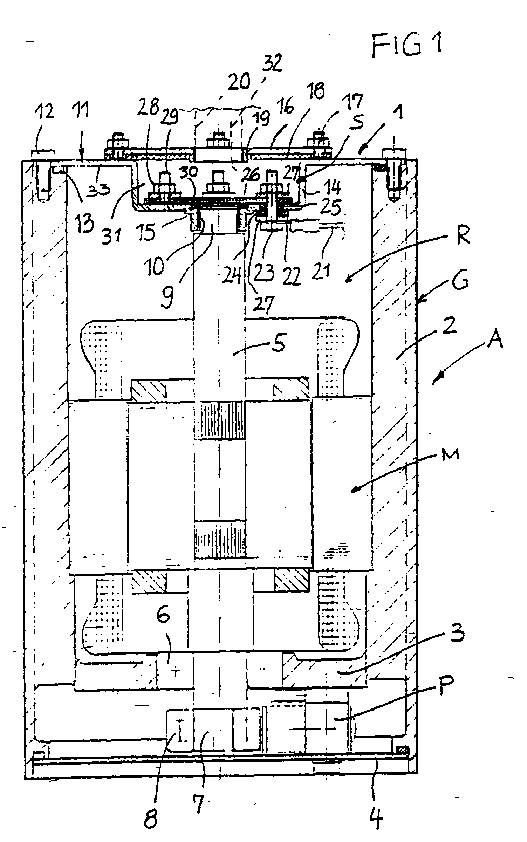

Anhand der Zeichnung wird eine Ausführungsform des Erfindungsgegenstandes erläutert. Die Fig. 1 ist ein Längsschnitt in der Achse der Welle des Elektromotors. Ein elektrohydraulisches Motorpumpenaggregat A weist ein geschlossenes Gehäuse G für einen unter Öl laufenden Elektromotor M und wenigstens ein hydraulisches Pumpenelement P auf. Das Gehäuse hat mehreckigen (rechteckigen oder quadratischen) Querschnitt oder ist rund. Es besteht aus einer Deckplatte 1, einem als Gußteil mit einer Querplatte 3 einstückig ausgebildeten GehäuseHauptteil 2 und einem unteren Deckel 4. Die mit 5 bezeichnete Welle des Elektromotors M verläuft vertikal und ist in der Querwand 3 in einem Hauptlager 6 drehbar gelagert. Ein exzentrischer Achszapfen der Welle 5 treibt über ein Wälzlager 8 das eine oder mehrere Pumpenelemente P, das zwischen dem unteren Deckel 4 und der Querwand 3 eingesetzt ist.

Das obere Ende der Welle 5 ist mit einem zentrischen Lagerzapfen 9 in einem Gleitlager 10 zentriert und drehgelagert. Das Gleitlager 10 ist in einem Gehäusedeckel 11 der Deckplatte 1 gehaltert, die mit Befestigungsschrauben 12 am Stirnende des Gehäuse-Haupt- teils 2 unter Zwischenlage einer Dichtung 13 öldicht festgelegt ist. Der Gehäusedeckel 11 besitzt einen äußeren ebenen Randflansch 33, von dem sich eine topfförmige Vertiefung 14 ins Innere des als Ölreservoir R dienenden Gehäuses G erstreckt. Die Vertiefung 14 hat einen ebenen Boden, in den eine hülsenartige Fassung 15 für das Gleitlager 10 eingeformt ist. Die Vertiefung 14 wird oben durch einen ebenen Deckel 16 abgedeckt, der mit Halteschrauben 17 und unter Zwischenlage einer elastischen bzw. isolierenden Schicht 18 auf den Randflansch 33 geschraubt ist. Die Platte 16 weist einen mittigen Kabeldurchgang 19 auf, in dem zweckmäßigerweise eine Kabeltülle 20 zum Durchführen wenigstens eines Außenkabels 32 festgelegt ist.

Vom Elektromotor M führen Innenkabel 21 zu Anschlüssen 22, zweckmäßigerweise zu Steckfahnen, an im Boden der Vertiefung 14 verteilten Anschlußelementen 23. Jedes Anschlußelement 23 ist eine Kopfschraube mit einem langen Schaft 29, auf den eine Haltemutter 28 aufgeschraubt ist. Der Schaft 29 durchsetzt eine Isolierung 25 in einer Bohrung des Bodens der Vertiefung 14 und ragt in einen Hohlraum 31 zwischen der Vertiefung 14 und dem Deckel 16. Der Anschluß 22, bzw. die Steckfahne, wird durch eine Unterlegscheibe 27 gesichert, unter der sich ein Isolierkörper 24, zweckmäßigerweise eine Isolierscheibe, befindet, die an die Unterseite des Gehäusedeckels 11 angepreßt ist. In der Vertiefung 14 ist eine Dichtplatte 26 aus isolierendem Material vorgesehen, die Durchgangsbohrungen für die Schäfte 29 der Anschlußelemente 23 aufweist und das offene Ende der Fassung 15 überdeckt und eine Dichtung 30 komprimiert. Unter den Haltemuttern 28 sind sind auf der Dichtplatte weitere Unterlegscheiben 27 vorgesehen. Die in Fig. 1 strichliert angedeuteten Außenkabel 32 werden an den Schäften 29 der Anschlußelemente 23 auf übliche Weise, z.B. mit Anschlußringen und weiteren Spannmuttern, festgelegt. Eines der Anschlußelemente 23 dient als Masseanschluß, der gegebenenfalls, ohne den Boden der Vertiefung 14 zu durchsetzen, mit dem Gehäusedeckel 11 in leitendem Kontakt steht.

Bei der Montage des Aggregats A werden das Hauptlager 6 in die Querwand 3 und der Stator des Elektromotors M in den Gehäuse-Hauptteil 2 eingepreßt. Die Deckplatte 1 kann in der in Fig. 1 gezeigten Konstellation vorgefertigt sein. Nachdem der Rotor des Elektromotors-M mit seiner Welle 5 durch das Hauptlager 6 oder bereits mit diesem eingepreßt ist, wird die Deckplatte 1 aufgesetzt und mit dem Gleitlager 10 auf den Lagerzapfen 9 aufgepreßt und mittels der Halteschrauben 12 festgelegt. Die Pumpenelemente P sind gegebenenfalls schon vorher zusammen mit dem Deckel 4 eingebaut bzw. werden abschließend eingebaut. Vor dem Aufpressen der Deckplatte 1 werden die Innenkabel 21 an die Steckfahnen 22 angesteckt. Danach wird das Gehäuse G bis über den Elektromotor M mit Öl befüllt. Das Aggregat ist dann betriebsfertig. Am Einsatzort wird der Deckel 16 abgenommen und werden die Außenkabel 32 durch die Kabeldurchführung 19 eingeführt und an die Anschlußelemente 23 angeschlossen. Danach braucht nur mehr der Deckel 16 aufgesetzt und mit den Schrauben 17 festgelegt zu werden.

## Patentansprüche

1. Elektrohydraulisches Motorpumpenaggregat (A), mit einem ein Ölreservoir bildenden, geschlossenen Gehäuse (G), in dem ein Elektromotor (M) und wenigstens ein von dessen Welle (5) antreibbares Pumpenelement (P) unter Öl angeordnet sind, mit einem oberen, ein Lager (10) für ein Ende der Welle (5) haltenden Gehäusedeckel (11), und mit einem öldichten Stromanschluß (S) für den Elektromotor, **dadurch gekennzeichnet,** daß der Stromanschluß (S) in den das Lager (10) haltenden Gehäusedeckel (11) öldicht und fest installierte Anschlußelemente (23) aufweist, an die im Inneren des Gehäuses (G) zum Elektromotor (M) führende Innenkabel (21) und außerhalb des Gehäuses (G) zur Stromversorgung führende Außenkabel (32) anschließbar sind.

2. Aggregat nach Anspruch 1, **dadurch gekennzeichnet,** daß im Gehäusedeckel (11) ein nach außen abgedeckter, vom Gehäuseinneren (R) öldicht getrennter Hohlraum (31) vorgesehen ist, in dem die Anschlußelemente (23) zum Anschließen der Außenkabel (32) von außen zugänglich installiert sind.

3. Aggregat nach Anspruch 1, **dadurch gekennzeichnet,** daß der Gehäusedeckel (11) eine nach außen offene, hülsenförmige Fassung (15) für das Wellenlager (10), vorzugsweise ein Gleitlager, aufweist, daß die Fassung (15) nach außen durch eine Dichtplatte (26) abgedichtet ist, und daß die Dichtplatte (26) mittels der Anschlußelemente (23) am Gehäusedeckel (11) festgelegt ist.

4. Aggregat nach Anspruch 3, **dadurch gekennzeichnet**, daß die Dichtplatte (26) aus isolierendem Material besteht und auf einer die Fassung (15) umgebenden Dichtung (30) aufliegt.

5. Aggregat nach Anspruch 1, **dadurch gekennzeichnet,** daß jedes Anschlußelement (23) eine Schraube mit einer Haltemutter (28) ist, und daß die Schraube und die Haltemutter gegenüber dem Gehäusedeckel (11) elektrisch isoliert sind.

6. Aggregat nach wenigstens einem der Ansprüche 1 bis 5, **dadurch gekennzeichnet,** daß die Schraube eine Kopfschraube mit dem Gehäuseinneren liegenden Kopf und über die Dichtplatte (26) und die Haltemutter (28) überstehendem, einen Anschluß für ein Außenkabel (32) bildenden Schaft (29) ist, daß die Schraube mit ihrem Schaft (29) eine mit einer Isolierung (25) ausgekleidete Bohrung des Gehäusedeckels (11) durchsetzt, daß zwischen dem Kopf und der Unterseite des Gehäusedeckels (11) ein Isolierkörper (24), vorzugsweise eine Isolierscheibe, liegt, und daß im Gehäuseinneren am Kopf oder/und Schaft ein Anschluß (22), vorzugsweise eine Steckfahne, für ein Innenkabel (21) vorgesehen ist.

7. Aggregat nach Anspruch 6, **dadurch gekennzeichnet,** daß unter der Haltemutter (28) und unter dem Kopf der Schraube (23) je eine Unterlegscheibe (27) aus Metall vorgesehen ist.

8. Aggregat nach den Ansprüchen 4 und 6, **dadurch gekennzeichnet,** daß die Dichtung (30) und die Isolierung (25) jeweils ein O-Ring ist.

9. Aggregat nach wenigstens einem der Ansprüche 1 bis 8, **dadurch gekennzeichnet**, daß der Gehäusedeckel (11) als Blechformteil hutförmig mit einer von einem umlaufenden Randflansch (33) nach innen in das Gehäuse (G) greifende Vertiefung (14) ausgebildet ist, an deren Boden die Fassung (15) und die fest installierten Anschlußelemente (23) angeordnet sind, und daß als Abdeckung des Hohlraums (31) eine ebene Scheibe (16) abnehmbar auf dem Randflansch (33) festgelegt ist.

10. Aggregat nach Anspruch 9, **dadurch gekennzeichnet,** daß an der Unterseite der Scheibe (16) ein elastischer, vorzugsweise elektrisch isolierender, Belag (18) angeordnet ist.

11. Aggregat nach den Ansprüchen 9 und 10, **dadurch gekennzeichnet,** daß die Scheibe (16) einen Kabeldurchgang (19) für die Außenkabel (32) aufweist, vorzugsweise mit einer im Kabeldurchgang (19) festgelegten Durchstecktülle oder Rohrverschraubung (20).

12. Aggregat nach wenigstens einem der Ansprüche 1 bis 11, **dadurch gekennzeichnet,** daß der Gehäusedeckel (11) versenkt im Stirnrand eines Gehäuse-Hauptteils (2) festgelegt ist, und daß der Gehäuse-Hauptteil (2) ein Gußformteil mit einer ein Hauptlager (6) der Welle (5) ent haltenden, einstückigen Querwand (3) ist.

## Claims

1. Electrohydraulic motor-pump unit (A), with a closed housing (G) which forms an oil reservoir and in which an electric motor (M) and at least one pump element (P) capable of being driven by the shaft (5) of the latter are arranged under oil, with an upper housing cover (11) holding a bearing (10) for one end of the shaft (5), and with an oil-tight current connection (S) for the electric motor, characterized in that the current connection (S) has connection elements (23) which are fixedly installed in an oil-tight manner into the housing cover (11) holding the bearing (10) and to which inner cables (21) leading to the electric motor (M) can be connected inside the housing (G) and outer cables (32) leading to the current supply can be connected outside the housing (G).

2. Unit according to Claim 1, characterized in that there is provided, in the housing cover (11), a cavity (31) which is covered relative to the outside and is separated from the housing interior (R) in an oil-tight manner and in which the connection elements (23) are installed, so as to be accessible from outside, for connecting the outer cables (32).

3. Unit according to Claim 1, characterized in that the housing cover (11) has an outwardly open sleeve-shaped socket (15) for the shaft bearing (10), preferably a sliding bearing, in that the socket (15) is sealed off relative to the outside by means of a sealing plate (26), and in that the sealing plate (26) is fixed to the housing cover (11) by means of the connection elements (23).

4. Unit according to Claim 3, characterized in that the sealing place (26) consists of insulating material and rests on a gasket (30) surrounding the socket (15).

5. Unit according to Claim 1, characterized in that each connection element (23) is a screw with a holding nut (23), and in that the screw and the holding nut are insulated electrically relative to the housing cover (11).

6. unit according to at least one of Claims 1 to 5, characterized in that the screw is a cap screw with a head located in the housing interior and with a shank (29) projecting above the sealing plate (26) and the holding nut (28) and forming a connection for an outer cable (32), in that the screw passes with its shank (29) through a bore of the housing cover (11), the said bore being lined with an insulation (25), in that an insulating body (24), preferably an insulating disc, is located between the head and the underside of the housing cover (11), and in that a connection (22), preferably a plug tab, for an inner cable (21) is provided on the head and/or shank in the housing interior.

7. Unit according to Claim 6, characterized in that a metal washer (27) is provided in each case under the holding nut (28) and under the head of the screw (23).

8. Unit according to Claims 4 and 6, characterized in that the gasket (30) and the insulation (25) are in each case an O-ring.

9. Unit according to at least one of Claims 1 to 8, characterized in that the housing cover (11) is designed as a sheet-metal moulding in the form of a hat with a depression (14) which extends from a peripheral edge flange (33) inwards into the housing (G) and on the bottom of which are arranged the socket (15) and the fixedly installed connection elements (23), and in that a plane disc (16), as a cover for the cavity (31), is fixed removably to the edge flange (33).

10. Unit according to Claim 9, characterized in that an elastic, preferably electrically insulating, coating (18) is arranged on the underside of the disc (16).

11. Unit according to Claims 9 and 10, characterized in that the disc (16) has a cable duct (19) for the outer cables (32), preferably with a lead-through bush or screwed pipe connection (20) fixed in the cable duct (19).

12. Unit according to at least one of Claims 1 to 11, characterized in that the housing cover (11) is fixed, countersunk, in the end edge of a housing main part (2), and in that the housing main part (2) is a cast moulding with a one-piece transverse wall (3) containing a main bearing (6) of the shaft (5).

## Revendications

1. Groupe motopompe électrohydraulique (A) comportant une enveloppe fermée (G) formant un réservoir d'huile dans laquelle sont placés sous huile un moteur électrique (M) et au moins un élément pompe (P) entraîné par l'arbre (5) de celui-ci, un couvercle d'enveloppe supérieur (11) supportant un palier (10) pour une extrémité de l'arbre (5), et un dispositif de connexion électrique étanche à l'huile (S) pour le moteur électrique, caractérisé par le fait que le dispositif de connexion électrique (S) présente des éléments de connexion (23) montés de manière étanche à l'huile et fixe dans le couvercle d'enveloppe (11) supportant le palier (10) et auxquels peuvent être connectés des câbles intérieurs (21) allant au moteur électrique (M) à l'intérieur de l'enveloppe (G) et des câbles extérieurs (32) allant à l'alimentation à l'extérieur de l'enveloppe (G).

2. Groupe selon la revendication 1, caractérisé par le fait que dans le couvercle d'enveloppe (11) est prévue une cavité (31) couverte vers l'extérieur, séparée de manière étanche à l'huile de l'intérieur (R) de l'enveloppe et dans laquelle sont montés, accessibles de l'extérieur, les éléments de connexion (23) pour la connexion des câbles extérieurs (32).

3. Groupe selon la revendication 1, caractérisé par le fait que le couvercle d'enveloppe (11) présente une monture en forme de douille et ouverte vers l'extérieur (15) pour le palier d'arbre (10), de préférence un palier lisse, que la monture (15) est rendue étanche vers l'extérieur par une plaque d'étanchéité (26), et que la plaque d'étanchéité (26) est fixée au couvercle d'enveloppe (11) au moyen des éléments de connexion (23).

4. Groupe selon la revendication 3, caractérisé par le fait que la plaque d'étanchéité (26) est en matière isolante et repose sur un joint (30) qui entoure la monture (15).

5. Groupe selon la revendication 1, caractérisé par le fait que chaque élément de connexion (23) est une vis pourvue d'un écrou d'arrêt (28), et que la vis et l'écrou d'arrêt sont isolés électriquement du couvercle d'enveloppe (11).

6. Groupe selon au moins une des revendications 1 à 5, caractérisé par le fait que la vis est une vis à tête dont la tête est située à l'intérieur de l'enveloppe et la tige (29) dépasse de la plaque d'étanchéité (26) et de l'écrou d'arrêt (28) et forme une connexion pour un câble extérieur (32), que la tige (29) de la vis passe par un trou revêtu d'une isolation (25) du couvercle d'enveloppe (11), qu'entre la tête et la face inférieure du couvercle d'enveloppe (11) est placé un corps isolant (24), de préférence une rondelle isolante, et qu'à l'intérieur de l'enveloppe est prévue sur la tête et/ou la tige une borne (22), de préférence une barrette enfichable, pour un câble intérieur (21).

7. Groupe selon la revendication 6, caractérisé par le fait que sous l'écrou d'arrêt (28) et sous la tête de la vis (23) est prévue une rondelle métallique (27).

8. Groupe selon les revendications 4 et 6, caractérisé par le fait que le joint (30) et l'isolation (25) sont des joints toriques.

9. Groupe selon au moins une des revendications 1 à 8, caractérisé par le fait que le couvercle d'enveloppe (11) est constitué d'une pièce façonnée en tôle en forme de chapeau ayant un renfoncement (14) qui s'engage vers l'intérieur dans l'enveloppe (G) depuis un rebord périphérique (33) et sur le fond duquel sont placés la monture (15) et les éléments de connexion montés fixes (23), et qu'une plaque plane (16) est fixée de manière amovible sur le rebord (33) comme couverture de la cavité (31).

10. Groupe selon la revendication 9, caractérisé par le fait que sur la face inférieure de la plaque (16) est placée une garniture élastique de préférence isolante (18).

11. Groupe selon les revendications 9 et 10, caractérisé par le fait que la plaque (16) présente un passage de câbles (19) pour les câbles extérieurs (32), de préférence avec un manchon ou un raccord fileté de tube (20) fixé dans ce passage de câbles (19).

12. Groupe selon au moins une des revendications 1 à 11, caractérisé par le fait que le couvercle d'enveloppe (11) est fixé encastré dans le bord frontal d'une partie principale (2) de l'enveloppe, et que la partie principale (2) de l'enveloppe est une pièce moulée ayant une paroi transversale (3) qui contient un palier principal (6) de l'arbre (5).
